# EUROPEAN PATENT APPLICATION

(11) **EP 4 676 068 A1**
(43) Date of publication of application: **07.01.2026**
(21) Application number: 24763258.1
(22) Date of filing: 01.03.2024
(51) Int. Cl.: H04N 21/6587

(54) **VIDEO VARIABLE-SPEED PLAYING METHOD AND APPARATUS, AND ELECTRONIC DEVICE AND STORAGE MEDIUM**

(30) Priority: 01.03.2023 CN 202310225360
(71) Applicant: Beijing Zitiao Network Technology Co., Ltd., Beijing 100190 (CN)
(72) Inventor: DONG, Hang, Beijing 100028 (CN)
(74) Representative: Isarpatent
(86) International application number: PCT/CN2024/079627
(87) International publication number: WO 2024/179578

(57) **Abstract**

Provided in the embodiments of the present disclosure are a video variable-speed playing method and apparatus, and an electronic device and a storage medium. The method comprises: acquiring a target video, which at least comprises a first video clip; performing identification on the first video clip, so as to obtain at least one target object; acquiring an action feature of the target object, and obtaining a target playing speed of the target video according to the action feature; and playing the target video on the basis of the target playing speed.

## Description

### CROSS-REFERENCE TO RELATED APPLICATIONS

The present application is based on and claims priority to Chinese Application No. 202310225360.0, filed on March 1, 2023, which is incorporated herein by reference in its entirety.

### TECHNICAL FIELD

Embodiments of the present disclosure relate to the field of Internet technologies, and in particular, to a video variable-speed playback method and apparatus, an electronic device, and a storage medium.

### BACKGROUND

Currently, live video streaming, rebroadcasting, and recorded broadcasting for various types of competitions have become one of the main types of business content of video platforms, which, by providing users with high-definition and low-latency video services, aim to meet users' needs for watching competitions.

In the related technologies, for recorded videos, live streaming platforms provide users with manual playback speed increasing or decreasing functions and jump playback functions, so that the users can locate video segments of interest through manual operations. However, in the related technologies, the solutions for manually adjusting the video playback speed have the problems such as low adjustment efficiency and poor adjustment accuracy, which affect the video watching experience.

### SUMMARY

Embodiments of the present disclosure provide a video variable-speed playback method and apparatus, an electronic device, and a storage medium, to overcome a problem that low adjustment efficiency and poor adjustment accuracy affect a video watching effect when a video playback speed is adjusted.

According to a first aspect, an embodiment of the present disclosure provides a video variable-speed playback method, including: obtaining a target video, the target video including at least a first video segment; recognizing the first video segment, to obtain at least one target object; obtaining an action feature of the target object, and obtaining a target playback speed of the target video based on the action feature; and playing the target video based on the target playback speed.

According to a second aspect, an embodiment of the present disclosure provides a video variable-speed playback apparatus, including: an obtaining module configured to obtain a target video, the target video including at least a first video segment, and recognize the first video segment to obtain at least one target object; a processing module configured to obtain an action feature of the target object, and obtain a target playback speed of the target video based on the action feature; and a playback module configured to play the target video based on the target playback speed.

According to a third aspect, an embodiment of the present disclosure provides an electronic device, including: a processor and a memory in communication connection with the processor, where the memory stores computer-executable instructions; and the processor executes the computer-executable instructions stored in the memory, to implement the video variable-speed playback method according to the first aspect and various possible designs of the first aspect.

According to a fourth aspect, an embodiment of the present disclosure provides a computer-readable storage medium. The computer-readable storage medium stores computer-executable instructions that, when executed by a processor, cause the video variable-speed playback method according to the first aspect and various possible designs of the first aspect to be implemented.

According to a fifth aspect, an embodiment of the present disclosure provides a computer program product including a computer program that, when executed by a processor, causes the video variable-speed playback method according to the first aspect and various possible designs of the first aspect to be implemented.

### BRIEF DESCRIPTION OF THE DRAWINGS

In order to more clearly describe the technical solutions in the embodiments of the present disclosure or in the related art, the accompanying drawings for describing the embodiments or the related art will be briefly described below. Apparently, the accompanying drawings in the description below show the embodiments of the present disclosure, and those of ordinary skill in the art may still derive other accompanying drawings from these accompanying drawings without creative efforts.
FIG. 1 is a diagram of an application scenario of a video variable-speed playback method according to an embodiment of the present disclosure;
FIG. 2 is a schematic flowchart 1 of a video variable-speed playback method according to an embodiment of the present disclosure;
FIG. 3 is a flowchart of a specific implementation of step S101 in the embodiment shown in FIG. 2;
FIG. 4 is a schematic diagram of automatically adjusting a target playback speed based on an action feature according to an embodiment of the present disclosure;
FIG. 5 is a flowchart of a specific implementation of step S103 in the embodiment shown in FIG. 2;
FIG. 6 is a schematic diagram of a target video playback process according to an embodiment of the present disclosure;
FIG. 7 is a schematic flowchart 2 of a video variable-speed playback method according to an embodiment of the present disclosure;
FIG. 8 is a flowchart of a specific implementation of step S202 in the embodiment shown in FIG. 7;
FIG. 9 is a flowchart of a specific implementation of step S203 in the embodiment shown in FIG. 7;
FIG. 10 is a flowchart of a specific implementation of step S2032 in the embodiment shown in FIG. 9;
FIG. 11 is a block diagram of a structure of a video variable-speed playback apparatus according to an embodiment of the present disclosure;
FIG. 12 is a schematic diagram of a structure of an electronic device according to an embodiment of the present disclosure; and
FIG. 13 is a schematic diagram of a hardware structure of an electronic device according to an embodiment of the present disclosure.

### DETAILED DESCRIPTION

In order to make the objectives, technical solutions, and advantages of embodiments of the present disclosure clearer, the technical solutions in the embodiments of the present disclosure will be described clearly and completely below with reference to the accompanying drawings in the embodiments of the present disclosure. Apparently, the embodiments described are some rather than all of the embodiments of the present disclosure. All other embodiments obtained by those of ordinary skill in the art based on the embodiments of the present disclosure without any creative effort shall fall within the scope of protection of the present disclosure.

It should be noted that user information (including but not limited to device information, personal information, etc., of a user) and data (including but not limited to data for analysis, stored data, displayed data, etc.) involved in the present disclosure are information and data for which an authorization is obtained from the user or a full authorization is obtained from each party, and the collection, use, and processing of relevant data need to comply with relevant laws, regulations, and standards of relevant countries and regions, for which corresponding operation entries are provided for the user to choose to authorize or deny.

An application scenario of the embodiments of the present disclosure is described below.

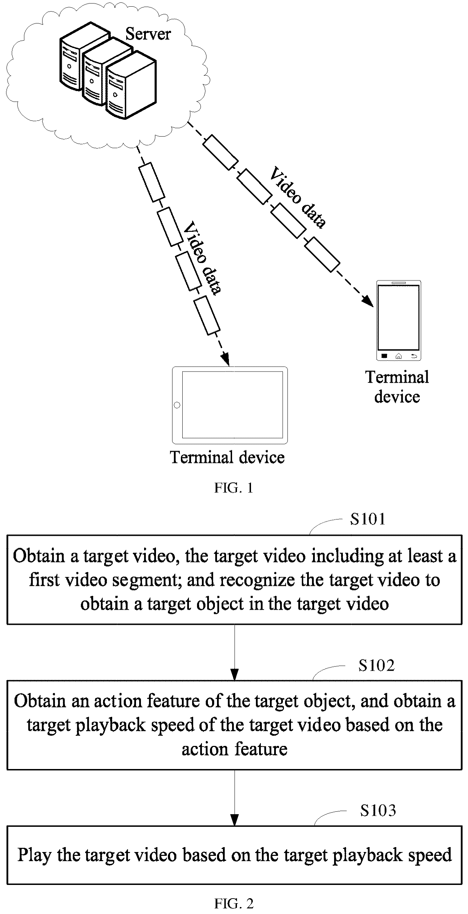

FIG. 1 is a diagram of an application scenario of a video variable-speed playback method according to an embodiment of the present disclosure. The video variable-speed playback method provided in the embodiments of the present disclosure may be applied to application scenarios of live video streaming, video rebroadcasting, and recorded broadcasting based on a video platform, and may also be applied to local video playback based on a terminal device. Specifically, an application scenario of live video streaming based on a video platform is used as an example. As shown in FIG. 1, the method provided in the embodiments of the present disclosure may be applied to a terminal device, for example, a smartphone or a tablet computer. The terminal device is in data communication with a server. In addition, a client of a video platform operates on a terminal device side, and a server of the video platform operates on a server side. The server on the server side sends video data (segmented target videos) to the terminal device in a form of video streams. The terminal device parses the video data through the client, and plays the segmented target videos in sequence.

In the related technologies, for recorded videos, live streaming platforms provide users with manual playback speed increasing or decreasing functions and jump playback functions, so that the users can locate video segments of interest through manual operations. However, because the user cannot know the content in the video in advance, the user usually adjusts the video playback speed based on guesses about the unplayed video content. This can easily lead to missing interesting content, thus requiring the user to rewind the video playback progress and watch it again. As a result, in the related technologies, the solutions for manually adjusting the video playback speed have the problems such as low adjustment efficiency and poor adjustment accuracy, which affect the video watching effect. In addition, for live video streaming scenarios, the solutions in the related technologies have the problem of being unable to adjust the playback speed of live videos.

Embodiments of the present disclosure provide a video variable-speed playback method to resolve the above problem.

Reference is made to FIG. 2. FIG. 2 is a schematic flowchart 1 of a video variable-speed playback method according to an embodiment of the present disclosure. The method in this embodiment may be applied to a terminal device, a server, or an electronic device having a similar function. For example, taking the terminal device as an example, the video variable-speed playback method includes step S101 to step S103.

In step S101, a target video is obtained, the target video including at least a first video segment, and the target video is recognized to obtain a target object in the target video.

For example, obtaining the target video means a process of obtaining and loading video data corresponding to the target video. The method provided in this embodiment is performed by a terminal device, for example, a smartphone. The target video may be locally stored in the terminal device (that is, a local video), and the terminal device may locally read and load a video file of the target video, to obtain the target video. Alternatively, the target video may be stored in a server (that is, an online video), and the terminal device accesses the server to obtain and load a corresponding video file, so as to obtain the target video. In different application scenarios, the target video may be a complete video, for example, a movie or a complete match, or may be a part of a complete video. More specifically, for example, in a process in which the terminal device obtains streaming media data from the server, a video corresponding to video data received by the terminal device each time may also be shown as a target video.

In some embodiments, the target video includes at least the first video segment, and the terminal device recognizes the first video segment in the target video after obtaining the target video, to obtain an object of interest in the target video, that is, the target object. The first video segment may be a video segment corresponding to a current moment during playback of the target video, and the first video segment includes at least a video segment within first duration before the current moment in the target video and/or a video segment within second duration after the current moment in the target video. For example, an implementation of recognizing the first video segment in the target video includes: extracting a pixel feature of a video frame in the first video segment, and then mapping the pixel feature to a corresponding object, to obtain objects in the first video segment; then, performing screening on the objects based on a preset rule, and determining an object of interest in the objects as a target object. Specifically, for example, video content of the target video is a football match. After at least one video frame in the first video segment of the target video is extracted, pixel feature extraction and feature mapping are performed on the video frame, to obtain objects including, for example, "spectator", "football", "referee", "player", and "camera". Then, according to a preset screening rule, "football" and "player" are determined as target objects.

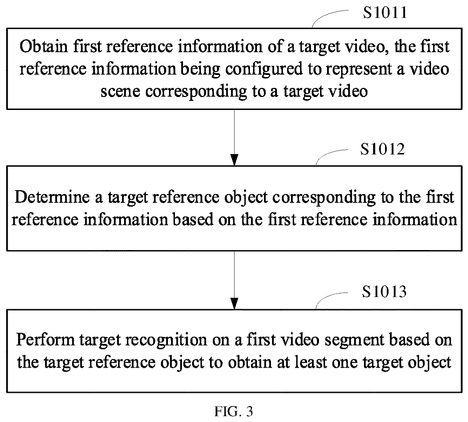

In a possible implementation, as shown in FIG. 3, step S101 includes the following specific implementation steps.

In step S1011, first reference information of the target video is obtained, the first reference information being configured to represent a video scene corresponding to the target video.

In step S1012, a target reference object corresponding to the first reference information is determined based on the first reference information.

In step S1013, target recognition is performed on the first video segment based on the target reference object to obtain at least one target object.

For example, the target video has the corresponding first reference information, and the first reference information is configured to represent the video scene corresponding to the target video. The video scene includes a content scene and an environment scene. Specifically, for example, based on the first reference information, the content scene represented by the first reference information is, for example, "football match", "basketball match", "action movie", or the like. The content scene represented by the first reference information is, for example, "outdoor", "indoor", "seaside", "early morning", "night", or the like. The first reference information may express the above information using a specific identifier or field. A specific implementation may be set as needed, and is not further described using an example. The first reference information may be locally stored in the terminal device or may be stored in the server. The server sends the first reference information at the same time or in advance when sending the target video to the terminal device, so that the terminal device obtains the first reference information.

In some embodiments, after obtaining the first reference information, the terminal device determines the target reference object corresponding to the first reference information based on the first reference information. Specifically, different content in the first reference information corresponds to different target reference objects. For example, when the video scene represented by the first reference information is "football match", a corresponding target reference object is "football", "player", "goal", or the like. Based on the target reference object, target recognition is performed on the video frame in the first video segment, that is, whether the video frame includes the above target reference object is detected, to obtain the at least one target object. Image feature recognition and detection based on the target object are related technologies, and are not described herein.

It may be understood that the target object and a corresponding action feature are described in this embodiment using an example in which the content of the target video is a scene of a football match. However, the method provided in this embodiment is not limited to an application scenario of playback of a match video of the "football match", but may also be applied to another application scenario of playback of a match video of a basketball match, a track and field match, an e-sports match, or the like. Accordingly, in different application scenarios, the target object and action feature in the target video have corresponding implementations. Examples are not listed one by one herein.

In this embodiment, the target reference object is dynamically determined by obtaining the first reference information corresponding to the target video, to obtain the matched target object in the target video with different video scenes, so that accurate recognition for the target object is implemented, and recognition efficiency and accuracy are improved.

In step S102, an action feature of the target object is obtained, and a target playback speed of the target video is obtained based on the action feature.

For example, after the target object is determined, the action feature of the target object is captured.

For example, using an example in which the content of the target video is a scene of a "football match", the target object is a "player", and the action feature of the target object is a posture of the "player". When the "player" is in a standing posture, the target object corresponds to one action feature. When the "player" is in a shooting posture, the target object corresponds to another action feature. A degree of attractiveness and a degree of user interest of the first video segment of the target video currently played can be mapped using the action feature of the target object. The dynamic feature may be obtained by performing further feature recognition on the target object. This process may be processed by a pre-trained action recognition model. That is, an image including the target object is input into the action recognition model, to obtain an identifier, an array, or a matrix that is output by the action recognition model and represents the action feature. Details are not described herein.

In a possible implementation, the target object includes a first object and a second object. A specific implementation step of obtaining the action feature of the target object includes: obtaining a positional relationship between the first object and the second object; and obtaining the action feature of the at least one target object based on the positional relationship.

For example, the at least one target object may consist of a plurality of objects. For example, one "player" and one "football" form two target objects, where the "player" is the first object, and the "football" is the second object. In a process of determining the action feature of the target object, to more accurately determine an overall action feature of the plurality of target objects, an accurate action feature is obtained with reference to the positional relationship between the first object and the second object. For example, when a spatial distance between the first object ("player") and the second object ("football") is greater than a first distance, an overall action feature formed by action features corresponding to the two target objects is determined to be a first action feature, representing a "non-contesting state". When the spatial distance between the first object and the second object is less than the first distance, the overall action feature formed by the action features corresponding to the two target objects is determined to be a second action feature, representing a "contesting state". This increases the implementation categories of action features, thereby further refining distinctions of action features, and improving the expression accuracy of action features.

Certainly, it may be understood that the above description is merely an example. To further improve the expression accuracy of the action feature, the positional relationship between the first object and the second object may further include a direction relationship in addition to the spatial distance relationship in the above example. The first object and the second object may alternatively respectively represent players of different teams, or other objects such as a player and a goal. The positional relationship may be represented by a matrix. Examples are not listed one by one herein. An implementation method for obtaining a positional relationship between two objects in a video or an image is a related technology known to those skilled in the art, and is not described herein.

In some embodiments, after obtaining the action feature, the action feature has a mapping relationship with the attractiveness of the video content. The higher the attractiveness of the video content, the lower the playback speed set for it. Conversely, the lower the attractiveness of the video content, the higher the playback speed set for it. Based on this principle, the action feature is mapped to the corresponding target playback speed. Specifically, when the action feature of the target object (for example, when the player is in a shooting posture) is mapped to video content with high attractiveness, the playback speed of the target video is reduced, so that the user can clearly watch the video content with high attractiveness. Conversely, when the action feature of the target object (for example, when the player is in a standing posture) is mapped to video content with low attractiveness, the playback speed of the target video is increased, so that the user can quickly skip the video content with low attractiveness, thereby achieving dynamic adjustment of the playback speed.

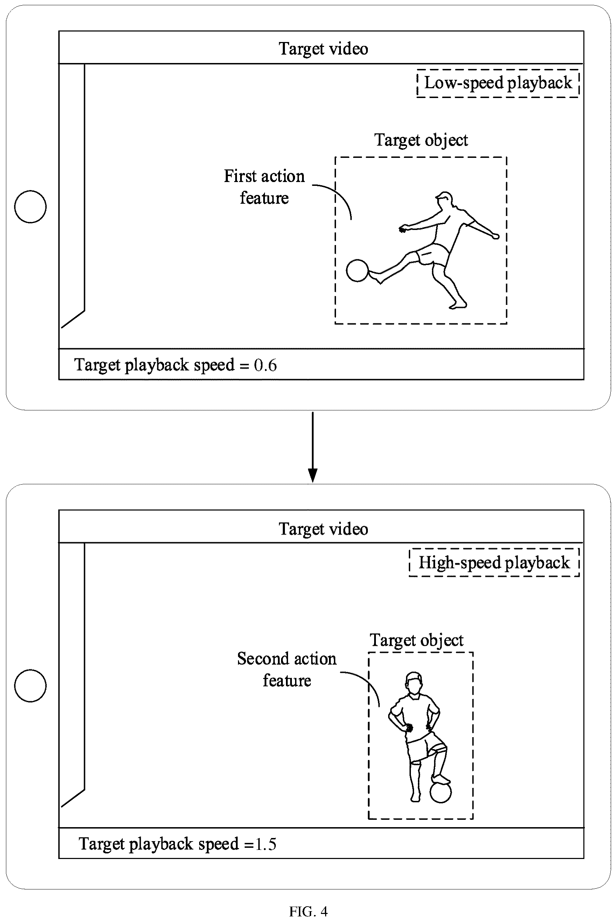

FIG. 4 is a schematic diagram of automatically adjusting a target playback speed based on an action feature according to an embodiment of the present disclosure.

As shown in FIG. 4, the terminal device is, for example, a smartphone. In a process in which the terminal device plays the target video through a video client, when the target object (shown as a "player" in the figure) displayed in the target video has a first action feature (for example, has a shooting action), it indicates that video content with high attractiveness is currently played in the target video, and the terminal device sets the target playback speed to 0.6 times a normal playback speed (shown as target playback speed=0.6 in the figure), and displays a text "low-speed playback" in the figure. When the target object displayed in the target video has a second action feature (for example, standing still or jogging), it indicates that video content with low attractiveness is currently played in the target video, and the terminal device sets the target playback speed to 1.5 times a normal playback speed (shown as target playback speed=1.5 in the figure), and displays a text "highspeed playback" in the figure.

In step S103, the target video is played based on the target playback speed.

For example, after the target playback speed is determined, the terminal device plays the target video based on the target playback speed, so that variable-speed playback for the target video can be implemented. The target playback speed may be a speed coefficient. For example, the target playback speed is 0.8, representing 0.8 times the normal playback speed. The target playback speed may alternatively be a specific value of the playback speed, for example, 60 frames per second, and is set as needed. This is not specifically limited herein. Specifically, the target video may include a plurality of video segments, and playing the target video based on the target playback speed may be playing all of the video segments in the target video based on the target playback speed, or may be playing only the above first video segment in the target video based on the target playback speed.

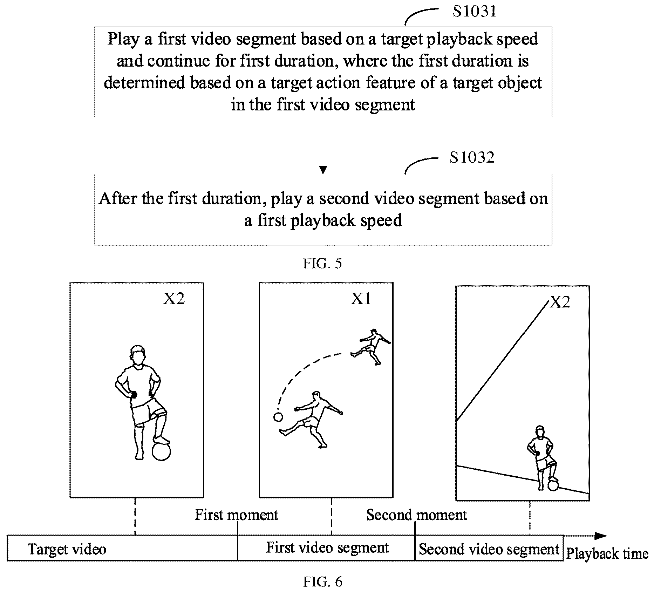

In a possible implementation, before the target video is played based on the target playback speed, the method further includes: obtaining a first playback speed of the target video, the first playback speed being a playback speed of the target video before playback of the first video segment. Specifically, the first playback speed is a playback speed of the target video before occurrence of variable-speed playback. The first playback speed may be the normal playback speed, that is, a speed at which the target video is normally played, or may be another playback speed set by the user, for example, 2 times the normal playback speed. For example, the target video further includes a second video segment, which is played after the first video segment. As shown in FIG. 5, a specific implementation of step S103 includes the following steps.

In step S1031, the first video segment is played based on the target playback speed and it continues for the first duration, where the first duration is determined based on a target action feature of the target object in the first video segment.

In step S1032, after the first duration, the second video segment is played based on the first playback speed.

For example, the implementation of playing the target video based on the target playback speed provided in this embodiment means reverting to the previous first playback speed after playing a video segment with high attractiveness in the target video at the target playback speed. Automatic decelerated playback during multiplication of speed playback of the user can be implemented. FIG. 6 is a schematic diagram of a target video playback process according to an embodiment of the present disclosure. The above process is described below with reference to FIG. 6. As shown in FIG. 6, during playback of the target video, the terminal device plays the target video at the first playback speed (shown as X2 in the figure and representing a double speed) based on a user setting before a first moment. When playback of the target video reaches the first moment, the terminal device generates, based on recognition on the target object and extraction and determining on the corresponding action feature, a video playback speed, that is, the target playback speed (shown as X1 in the figure and representing a normal speed), matching current video content with high attractiveness, and plays the first video segment at the target playback speed. In addition, the terminal device continuously recognizes and determines an action feature of a target object appearing in the target video. When the target object in the target video disappears, or the action feature of the target object no longer represents video content of interest (that is, the target action feature of the target object cannot be detected, where the target action feature corresponds to video content of interest), the terminal device continues to play the target video based on the first playback speed, that is, at a second moment, the terminal device continues to play the second video segment based on the first playback speed. Duration for which the terminal device plays the first video segment at the target playback speed is the first duration, that is, an interval between the first moment and the second moment. It can be learned from the above description that the first duration is determined based on the target action feature of the target object in the target video.

In the steps of this embodiment, the first playback speed of the target video before speed variation is recorded, and after the target action feature of the target object in the target video disappears, (the second video segment of) the target video continues to be played at the previously set first playback speed, so that precise speed variation control for video content of interest in the target video is achieved, a personalized playback need of the user is met, and video variable-speed playback efficiency is improved.

In this embodiment, the target video is obtained, the target video including at least the first video segment. The first video segment is recognized to obtain the at least one target object. The action feature of the target object is obtained, and the target playback speed of the target video is obtained based on the action feature. The target video is played based on the target playback speed. The target object in the target video is recognized, and variable-speed playback is performed on currently played video content of the target video based on the action feature of the target object, so that the playback speed of the target video matches the video content. In this way, dynamic variable-speed playback with slow playback of a video segment of interest and fast playback of a video segment of less interest is achieved, speed adjustment efficiency and accuracy are improved, an improper playback speed is prevented from affecting video watching, and a video watching effect is improved.

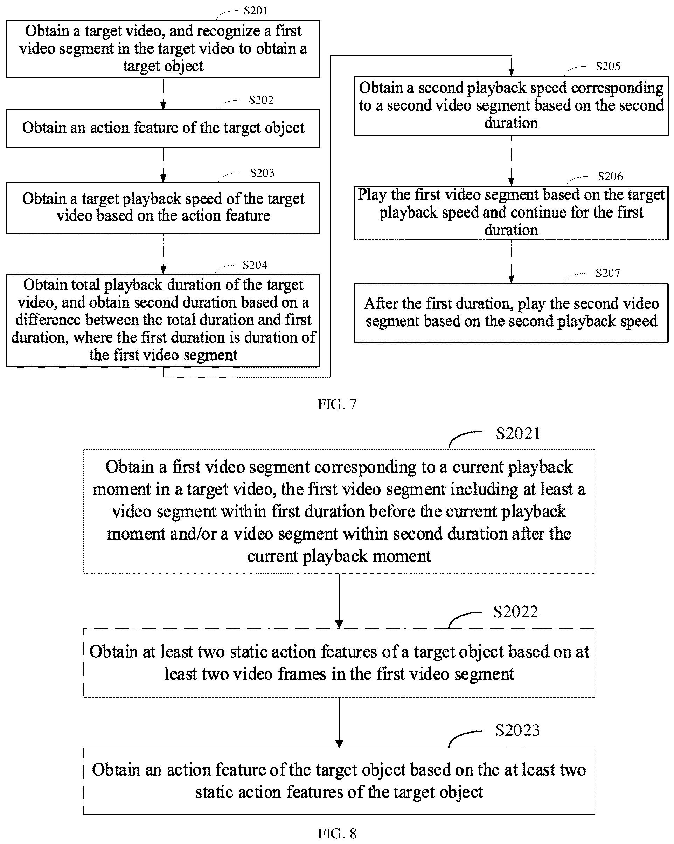

Reference is made to FIG. 7. FIG. 7 is a schematic flowchart 2 of a video variable-speed playback method according to an embodiment of the present disclosure. In this embodiment, steps S102 and S103 are further detailed based on the embodiment shown in FIG. 2. The video variable-speed playback method includes the following steps.

In step S201, a target video is obtained, and a first video segment in the target video is recognized to obtain a target object.

In step S202, an action feature of the target object is obtained.

For example, in the above embodiment, an implementation of obtaining the action feature of the target object based on a single video frame in the first video segment is described. Details are not described herein. In another possible implementation, a plurality of frames of images of the first video segment may be obtained, and a more accurate action feature may be obtained based on a change relationship between the plurality of frames of images.

For example, as shown in FIG. 8, a specific implementation of step S202 includes the following steps.

In step S2021, the first video segment corresponding to a current playback moment in the target video is obtained, the first video segment including at least a video segment within first duration before the current playback moment and/or a video segment within second duration after the current playback moment.

In step S2022, at least two static action features of the target object are obtained based on at least two video frames in the first video segment.

In step S2023, the action feature of the target object is obtained based on the at least two static action features of the target object.

For example, the corresponding first video segment is obtained based on the current moment at which the target video is played, and the first video segment may be a video segment before or after a video playback position corresponding to the current moment. Then, an action feature of a target object in each target video frame is captured based on at least two target video frames in the first video segment, to obtain a feature corresponding to each target video frame, that is, a static action feature. More specifically, the static action feature is a feature representing a posture or a shape of a recognized object. For a method for obtaining the static action feature, refer to the descriptions of step S102 in the embodiment shown in FIG. 2. Details are not described herein.

In some embodiments, after the at least two static action features are obtained, the action feature is generated based on a coherence feature between the at least two static action features. For example, a video frame P1 and a video frame P2 in the first video segment are extracted, and after action feature capture is separately performed, a corresponding first static action feature and a corresponding second static action feature are obtained. More specifically, the first static action feature represents, for example, a posture of a "dribbling action", and the second static action feature represents, for example, a posture of a "shooting action". Then, a dynamic feature formed based on the first static feature and the second static feature is used as the action feature of the target object, that is, a coherent action that represents "dribbling and shooting". In some embodiments, when there are a plurality of target objects (for example, a first object and a second object) in the first video segment, an action feature corresponding to each target object may be determined according to the above steps. Details are not described.

In this embodiment, a plurality of video frames corresponding to the current moment are obtained, and feature capture is separately performed, to obtain a plurality of corresponding static action features. Then, the plurality of static action features are combined, to obtain an action feature that can represent a coherent action, so that the obtained action feature of the target object has a temporal dimension and a posture dimension, and the obtained action feature can more accurately express video content.

In step S203, a target playback speed of the target video is obtained based on the action feature.

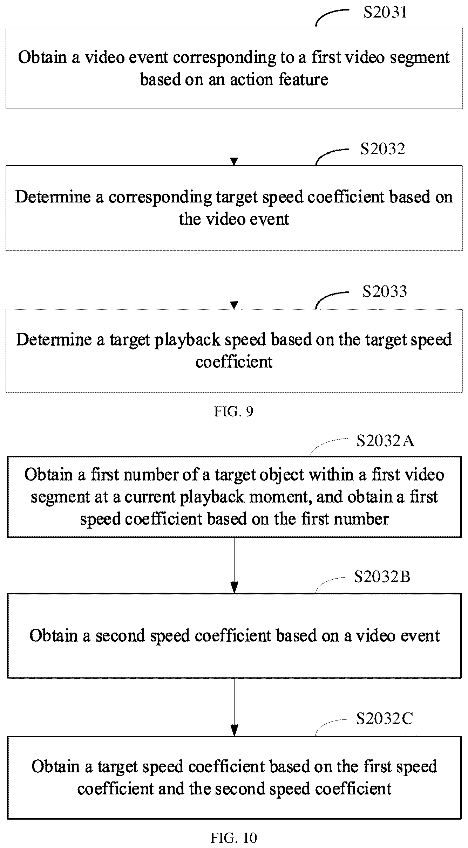

For example, after the action feature is obtained, in a possible implementation, based on the action feature and preset mapping information, the corresponding target playback speed can be obtained. For a specific implementation, refer to the descriptions of the related steps in the embodiment shown in FIG. 2. In another possible implementation, as shown in FIG. 9, a specific implementation of step S203 includes the following steps.

In step S2031, a video event corresponding to the first video segment is obtained based on the action feature.

In step S2032, a corresponding target speed coefficient is determined based on the video event.

In step S2033, the target playback speed is determined based on the target speed coefficient.

For example, the first video segment may include one or more target objects. In a specific scene, the target object is, for example, a "player". Each target object corresponds to a respective action feature. Therefore, in the target video, a set of action features corresponding to all target objects may be mapped to a corresponding video event, for example, "score", "pause", or "end of match". The video event corresponds to more specific and clearer video content. Therefore, speed adjustment based on the video time can achieve a better speed adjustment effect, and improve accuracy of speed adjustment. For example, for a user demand "fast forward to the start of the second half", the video event "start of the second half" in the target video needs to be accurately determined. The video event is determined by action features of a plurality of target objects together. For example, when a plurality of players (target objects) are in postures (action features) such as standing or sitting, a corresponding video event is determined as "end of match".

In some embodiments, after the video event corresponding to the current moment is determined, a corresponding target speed coefficient can be obtained based on a mapping relationship between a video event and a speed coefficient, and then the target playback speed can be obtained based on the target speed coefficient and a normal playback speed of the target video.

For example, as shown in FIG. 10, a specific implementation of step S2032 includes the following steps.

In step S2032A, a first number of target objects within the first video segment at a current playback moment is obtained, and a first speed coefficient is obtained based on the first number.

In step S2032B, a second speed coefficient is obtained based on the video event.

In step S2032C, the target speed coefficient is obtained based on the first speed coefficient and the second speed coefficient.

For example, in a possible scenario, a number of target objects may affect a watching effect of the target video. For example, when a plurality of "players" crowd together in the target video, the user has a need to carefully watch a match process at a lower playback speed. Therefore, a video playback speed may be further adjusted based on a number of target objects in the first video segment. Specifically, the corresponding first speed coefficient is determined based on the first number of target objects within the first video segment at the current playback moment, then the second speed coefficient is obtained based on the video event obtained in the previous step, and the target playback speed is obtained based on a product of the first speed coefficient and the second speed coefficient. In this embodiment, the corresponding first speed coefficient is determined by detecting the first number of target objects, and the finally generated target playback speed is finely adjusted based on the first speed coefficient. This further improves accuracy and appropriateness of the target playback speed and improves watching experience of the user.

For example, in an application scenario of live streaming or rebroadcasting of a match, a terminal device receives, through streaming, and caches a target video sent by a server, and then plays video segments of the target video in a video playback order. In this process, when a video event such as "score" or "shooting" occurs, after the terminal device determines a target playback speed (for example, 0.5 times the playback speed) that is not consistent with the normal playback speed, and performs playback based on the target playback speed, the following problem may occur. If the terminal device performs decelerated playback on a video segment in the target video, overall playback progress of the target video lags, and overall playback duration increases. In a live streaming scenario of a match, the problem may cause a user watching the video to know a match result later, and there is a "match result spoiler" problem. Therefore, to resolve the problem of the lag in the playback progress caused in a process of using the above video variable-speed playback method in a live video streaming scenario, this embodiment provides the following solution. For example, the target video further includes a second video segment, which is played after the first video segment. Specific steps include the following.

In step S204, total playback duration of the target video is obtained, and second duration is obtained based on a difference between the total duration and the first duration, where the first duration is duration of the first video segment.

In step S205, a second playback speed corresponding to the second video segment is obtained based on the second duration.

In step S206, the first video segment is played based on the target playback speed and it continues for the first duration.

In step S207, after the first duration, the second video segment is played based on the second playback speed.

For example, the total playback duration of the target video is first obtained. The target video may be a complete match video in a video rebroadcasting scenario. Alternatively, the target video may be a segment of a match video, such as a 5-minute or 10-minute video segment, in a live video streaming scenario. After obtaining the target video, the terminal device determines the total playback duration of the target video, and performs step S201 to step S203. When video content (the first video segment) of interest with high attractiveness appears in the target video, the corresponding target playback speed and the corresponding first duration are obtained. The first duration is the duration of the first video segment, and the first duration is determined based on the target action feature of the target object in the first video segment. A method for determining the first duration is described in the corresponding steps in the embodiment shown in FIG. 2. Details are not described herein. Then, the second duration is obtained based on the difference between the total duration and the first duration, and the second duration is remaining playable duration of the target video in a case of ensuring that the total playback duration of the target video remains unchanged, that is, remaining playable duration of the second video segment after the first video segment. Then, a compensation speed coefficient can be obtained based on a proportional relationship between the second duration and a video length of the second video segment of the target video. Specifically, for example, the target video includes the first video segment and the second video segment. Based on the total playback duration of the target video and the first duration corresponding to the first video segment, the obtained second duration corresponding to the second video segment is 30 seconds. After decelerated playback (playback at the target playback speed) is performed on the target video in the first duration, if it is required that no playback lag occurs relative to a case of normal-speed playback of the entire target video when playback of the target video ends (that is, a case in which playback of the target video at the normal speed is completed but playback of the target video whose first video segment is played at a variable speed is not completed does not occur), playback of the remaining second video segment of the target video needs to be completed within 30 seconds. For example, if playback of the second video segment at the normal playback speed needs 60 seconds, correspondingly, the second playback speed corresponding to the second video segment is 2 times the normal playback speed, that is, the second playback speed is 2 (compensation speed coefficient). This is equivalent to accelerating playback in the second half of the target video, to ensure that the overall playback duration of the target video is not prolonged, so as to resolve a problem of playback lag.

In this embodiment, step S201 is consistent with step S101 in the above embodiment. For detailed descriptions, refer to the descriptions of step S101. Details are not described herein.

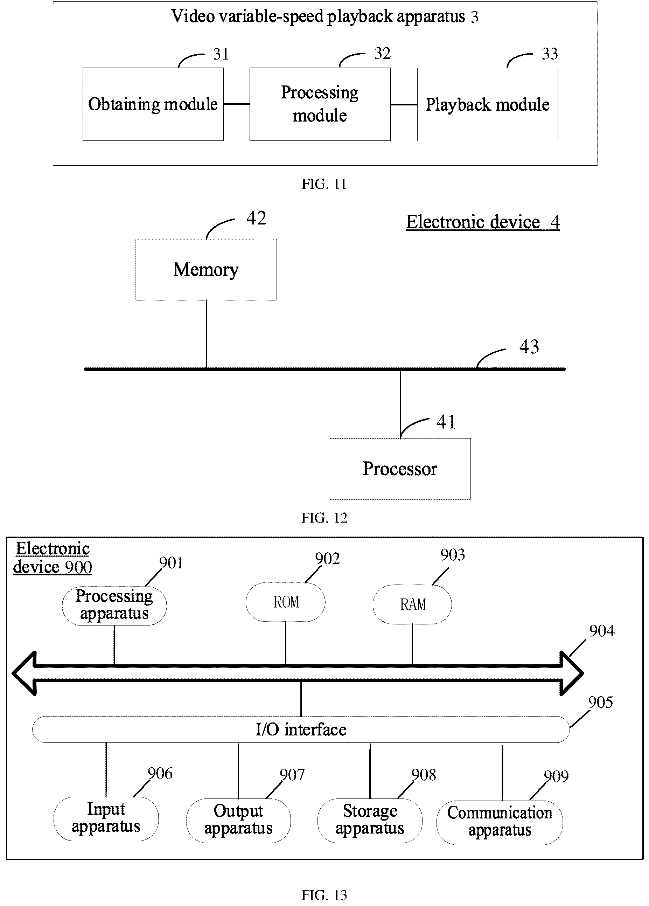

Corresponding to the video speed change method in the above embodiment, FIG. 11 is a block diagram of a structure of a video variable-speed playback apparatus according to an embodiment of the present disclosure. For ease of illustration, only parts related to this embodiment of the present disclosure are shown. With reference to FIG. 11, the video variable-speed playback apparatus 3 includes:
an obtaining module 31 configured to obtain a target video, the target video including at least a first video segment, and recognize the first video segment to obtain at least one target object; a processing module 32 configured to obtain an action feature of the target object, and obtain a target playback speed of the target video based on the action feature; and a playback module 33 configured to play the target video based on the target playback speed.

In some embodiments of the present disclosure, when recognizing the first video segment to obtain the at least one target object, the obtaining module 31 is specifically configured to: obtain first reference information of the target video, the first reference information being configured to represent a video scene corresponding to the target video; determine a target reference object corresponding to the first reference information based on the first reference information; and perform target recognition on the first video segment based on the target reference object to obtain the at least one target object.

In some embodiments of the present disclosure, when obtaining the target playback speed of the target video based on the action feature, the processing module 32 is specifically configured to: obtain a video event corresponding to the first video segment based on the action feature; and determine the target playback speed based on the video event.

In some embodiments of the present disclosure, when determining the target playback speed based on the video event, the processing module 32 is specifically configured to: obtain a first number of the target object within the first video segment at a current playback moment, and obtain a first speed coefficient based on the first number; obtain a second speed coefficient based on the video event; and obtain a target speed coefficient based on the first speed coefficient and the second speed coefficient.

In some embodiments of the present disclosure, the target object includes a first object and a second object. When obtaining the action feature of the target object, the processing module 32 is specifically configured to: obtain a positional relationship between the first object and the second object; and obtain the action feature of the at least one target object based on the positional relationship.

In some embodiments of the present disclosure, when obtaining the action feature of the target object, the processing module 32 is specifically configured to: obtain at least two static action features of the target object based on at least two video frames in the first video segment; and obtain the action feature of the target object based on the at least two static action features of the target object.

In some embodiments of the present disclosure, before the target video is played based on the target playback speed, the obtaining module 31 is further configured to obtain a first playback speed of the target video, the first playback speed being a playback speed of the target video before playback of the first video segment; and the playback module 33 is specifically configured to: play the first video segment based on the target playback speed and continue for first duration, where the first duration is determined based on a target action feature of the target object in the first video segment; and after the first duration, play the second video segment based on the first playback speed.

In some embodiments of the present disclosure, the obtaining module 31 is further configured to obtain a second playback speed corresponding to the second video segment based on a difference between total playback duration of the target video and the first duration, where the first duration is duration of the first video segment; and the playback module 33 is specifically configured to: play the first video segment based on the target playback speed and continue for the first duration; and after the first duration, play the second video segment based on the second playback speed.

The obtaining module 31, the processing module 32, and the playback module 33 are connected in sequence. The video variable-speed playback 3 provided in this embodiment may perform the technical solution of the above method embodiment. The implementation principles and technical effects thereof are similar, which are not repeated in this embodiment.

FIG. 12 is a schematic diagram of a structure of an electronic device according to an embodiment of the present disclosure. As shown in FIG. 12, an electronic device 4 includes: a processor 41, and a memory 42 in communication connection with the processor 41, where the memory 42 stores computer-executable instructions; and the processor 41 executes the computer-executable instructions stored in the memory 42 to implement the video variable-speed playback method in the embodiments shown in FIG. 2 to FIG. 10.

In some embodiments, the processor 41 and the memory 42 are connected through a bus 43.

The related description may be understood with reference to related description and effects that correspond to the steps in the embodiments corresponding to FIG. 2 to FIG. 10. Details are not described herein again.

An embodiment of the present disclosure provides a computer-readable storage medium. The computer-readable storage medium stores computer-executable instructions, and the computer-executable instructions, when executed by a processor, are configured to implement the video variable-speed playback method according to any one of the embodiments corresponding to FIG. 2 to FIG. 10 of the present disclosure.

An embodiment of the present disclosure provides a computer program product including a computer program that, when executed by a processor, causes the video variable-speed playback method in the embodiments shown in FIG. 2 to FIG. 10 to be implemented.

FIG. 13 is a schematic diagram of a structure of an electronic device 900 suitable for implementing the embodiments of the present disclosure. The electronic device 900 may be a terminal device or a server. The terminal device may include, but is not limited to, a mobile terminal such as a mobile phone, a notebook computer, a digital broadcast receiver, a personal digital assistant (PDA), a tablet computer (portable Android device, PAD), a portable media player (PMP), and a vehicle-mounted terminal (such as a vehicle navigation terminal), and a fixed terminal such as a digital TV and a desktop computer. The electronic device shown in FIG. 13 is merely an example, and shall not impose any limitation on the function and scope of use of the embodiments of the present disclosure.

As shown in FIG. 13, the electronic device 900 may include a processing apparatus (e.g., a central processing unit or a graphics processing unit) 901 that may perform a variety of appropriate actions and processing in accordance with a program stored in a read-only memory (ROM) 902 or a program loaded from a storage apparatus 908 into a random access memory (RAM) 903. The RAM 903 further stores various programs and data required for the operation of the electronic device 900. The processing apparatus 901, the ROM 902, and the RAM 903 are connected to one another through a bus 904. An input/output (I/O) interface 905 is also connected to the bus 904.

Generally, the following apparatuses may be connected to the I/O interface 905: an input apparatus 906 including, for example, a touchscreen, a touchpad, a keyboard, a mouse, a camera, a microphone, an accelerometer, and a gyroscope; an output apparatus 907 including, for example, a liquid crystal display (LCD), a speaker, and a vibrator; the storage apparatus 908 including, for example, a tape and a hard disk; and a communication apparatus 909. The communication apparatus 909 may allow the electronic device 900 to perform wireless or wired communication with other devices to exchange data. Although FIG. 13 shows the electronic device 900 having various apparatuses, it should be understood that it is not required to implement or have all of the shown apparatuses. It may be an alternative to implement or have more or fewer apparatuses.

In particular, according to an embodiment of the present disclosure, the process described above with reference to the flowchart may be implemented as a computer software program. For example, this embodiment of the present disclosure includes a computer program product, which includes a computer program carried on a computer-readable medium, where the computer program includes program code for performing the method shown in the flowchart. In such an embodiment, the computer program may be downloaded and installed from a network through the communication apparatus 909, installed from the storage apparatus 908, or installed from the ROM 902. When the computer program is executed by the processing apparatus 901, the above-mentioned functions defined in the method of the embodiment of the present disclosure are performed.

It should be noted that the above computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

The above computer-readable medium may be contained in the above electronic device. Alternatively, the computer-readable medium may exist independently, without being assembled into the electronic device.

The above computer-readable medium carries one or more programs that, when executed by the electronic device, cause the electronic device to perform the method shown in the above embodiment.

The computer program code for performing the operations in the present disclosure may be written in one or more programming languages or a combination thereof, where the programming languages include an object-oriented programming language, such as Java, Smalltalk, or C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user via any kind of network, including a local area network (LAN) or a wide area network (WAN), or may be connected to an external computer (for example, connected via the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, a first obtaining unit may alternatively be described as "a unit for obtaining at least two internet protocol addresses".

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

In a first aspect, according to one or more embodiments of the present disclosure, a video variable-speed playback method is provided. The method includes: obtaining a target video, the target video including at least a first video segment; recognizing the first video segment to obtain at least one target object; obtaining an action feature of the target object, and obtaining a target playback speed of the target video based on the action feature; and playing the target video based on the target playback speed.

According to one or more embodiments of the present disclosure, the recognizing the first video segment to obtain at least one target object includes: obtaining first reference information of the target video, the first reference information being configured to represent a video scene corresponding to the target video; determining a target reference object corresponding to the first reference information based on the first reference information; and performing target recognition on the first video segment based on the target reference object to obtain the at least one target object.

According to one or more embodiments of the present disclosure, the obtaining a target playback speed of the target video based on the action feature includes: obtaining a video event corresponding to the first video segment based on a combination of at least two action features; and determining the target playback speed based on the video event.

According to one or more embodiments of the present disclosure, the determining the target playback speed based on the video event includes: obtaining a first number of the target object within the first video segment at a current playback moment, and obtaining a first speed coefficient based on the first number; obtaining a second speed coefficient based on the video event; and obtaining the target playback speed based on the first speed coefficient and the second speed coefficient.

According to one or more embodiments of the present disclosure, the at least one target object includes a first object and a second object; and the obtaining an action feature of the target object includes: obtaining a positional relationship between the first object and the second object; and obtaining the action feature of the target object based on the positional relationship.

According to one or more embodiments of the present disclosure, the obtaining an action feature of the target object includes: obtaining at least two static action features of the target object based on at least two video frames in the first video segment; and obtaining the action feature of the target object based on the at least two static action features of the target object.

According to one or more embodiments of the present disclosure, before the playing the target video based on the target playback speed, the method further includes: obtaining a first playback speed of the target video, the first playback speed being a playback speed of the target video before playback of the first video segment; and the playing the target video based on the target playback speed includes: playing the first video segment based on the target playback speed and continuing for the first duration, where the first duration is determined based on a target action feature of the target object in the first video segment; and after the first duration, playing the second video segment based on the first playback speed.

According to one or more embodiments of the present disclosure, the method further includes: obtaining a second playback speed corresponding to the second video segment based on a difference between total playback duration of the target video and the first duration, where the first duration is duration of the first video segment; and the playing the target video based on the target playback speed includes: playing the first video segment based on the target playback speed and continuing for the first duration; and after the first duration, playing the second video segment based on the second playback speed.

In a second aspect, according to one or more embodiments of the present disclosure, a video variable-speed playback apparatus is provided. The apparatus includes: an obtaining module configured to: obtain a target video, the target video including at least a first video segment, and recognize the first video segment to obtain at least one target object; a processing module configured to: obtain an action feature of the target object, and obtain a target playback speed of the target video based on the action feature; and a playback module configured to play the target video based on the target playback speed.

According to one or more embodiments of the present disclosure, when recognizing the first video segment to obtain the at least one target object, the obtaining module is specifically configured to: obtain first reference information of the target video, the first reference information being configured to represent a video scene corresponding to the target video; determine a target reference object corresponding to the first reference information based on the first reference information; and perform target recognition on the first video segment based on the target reference object to obtain the at least one target object.

According to one or more embodiments of the present disclosure, when obtaining the target playback speed of the target video based on the action feature, the processing module is specifically configured to: obtain a video event corresponding to the first video segment based on a combination of at least two action features; and determine the target playback speed based on the video event.

According to one or more embodiments of the present disclosure, when determining the target playback speed based on the video event, the processing module is specifically configured to: obtain a first number of the target object within the first video segment at a current playback moment, and obtain a first speed coefficient based on the first number; obtain a second speed coefficient based on the video event; and obtain the target speed coefficient based on the first speed coefficient and the second speed coefficient.

According to one or more embodiments of the present disclosure, the at least one target object includes a first object and a second object; and when obtaining the action feature of the target object, the processing module is specifically configured to: obtain a positional relationship between the first object and the second object; and obtain the action feature of the target object based on the positional relationship.

According to one or more embodiments of the present disclosure, when obtaining the action feature of the target object, the processing module is specifically configured to: obtain at least two static action features of the target object based on at least two video frames in the first video segment; and obtain the action feature of the target object based on the at least two static action features of the target object.

According to one or more embodiments of the present disclosure, before the target video is played based on the target playback speed, the obtaining module is further configured to: obtain a first playback speed of the target video, the first playback speed being a playback speed of the target video before playback of the first video segment; and the playback module is specifically configured to: play the first video segment based on the target playback speed and continue for the first duration, where the first duration is determined based on a target action feature of the target object in the first video segment; and after the first duration, play the second video segment based on the first playback speed.

According to one or more embodiments of the present disclosure, the obtaining module is further configured to: obtain a second playback speed corresponding to the second video segment based on a difference between total playback duration of the target video and the first duration, where the first duration is duration of the first video segment; and the playback module 33 is specifically configured to: play the first video segment based on the target playback speed and continue for the first duration; and after the first duration, play the second video segment based on the second playback speed.

In a third aspect, according to one or more embodiments of the present disclosure, there is provided an electronic device. The electronic device includes: a processor and a memory in communication connection with the processor, where the memory stores computer-executable instructions; and the processor executes the computer-executable instructions stored in the memory, to implement the video variable-speed playback method according to the first aspect and various possible designs of the first aspect.

In a fourth aspect, according to one or more embodiments of the present disclosure, a computer-readable storage medium is provided, where the computer-readable storage medium stores computer-executable instructions that, when executed by a processor, cause the video variable-speed playback method as described in the first aspect and various possible designs of the first aspect to be implemented.

According to a fifth aspect, an embodiment of the present disclosure provides a computer program product including a computer program that, when executed by a processor, causes the video variable-speed playback method according to the first aspect and various possible designs of the first aspect to be implemented.

The foregoing descriptions are merely preferred embodiments of the present disclosure and explanations of the applied technical principles. Those skilled in the art should understand that the scope of disclosure involved in the present disclosure is not limited to the technical solutions formed by specific combinations of the foregoing technical features, and shall also cover other technical solutions formed by any combination of the foregoing technical features or equivalent features thereof without departing from the foregoing concept of disclosure, for example, a technical solution formed by a replacement of the foregoing features with technical features with similar functions disclosed in the present disclosure (but not limited thereto).

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the foregoing discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable subcombination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

## Claims

1. A video variable-speed playback method, comprising:
obtaining a target video, wherein the target video comprises at least a first video segment;
recognizing the first video segment to obtain at least one target object;
obtaining an action feature of the target object, and obtaining a target playback speed of the target video based on the action feature; and
playing the target video based on the target playback speed.

2. The video variable-speed playback method according to claim 1, wherein the recognizing the first video segment to obtain at least one target object comprises:
obtaining first reference information of the target video, wherein the first reference information is configured to represent a video scene corresponding to the target video;
determining a target reference object corresponding to the first reference information based on the first reference information; and
performing target recognition on the first video segment based on the target reference object to obtain the at least one target object.

3. The video variable-speed playback method according to claim 1 or 2, wherein the obtaining a target playback speed of the target video based on the action feature comprises:
obtaining a video event corresponding to the first video segment based on a combination of at least two action features; and
determining the target playback speed based on the video event.

4. The video variable-speed playback method according to claim 3, wherein the determining the target playback speed based on the video event comprises:
obtaining a first number of the target object within the first video segment at a current playback moment, and obtaining a first speed coefficient based on the first number;
obtaining a second speed coefficient based on the video event; and
obtaining the target playback speed based on the first speed coefficient and the second speed coefficient.

5. The video variable-speed playback method according to any one of claims 1 to 4, wherein the at least one target object comprises a first object and a second object, and the obtaining an action feature of the target object comprises:
obtaining a positional relationship between the first object and the second object; and
obtaining the action feature of the target object based on the positional relationship.

6. The video variable-speed playback method according to any one of claims 1 to 5, wherein the obtaining an action feature of the target object comprises:
obtaining the first video segment corresponding to a current playback moment in the target video, wherein the first video segment comprises at least a video segment within first duration before the current playback moment and/or a video segment within second duration after the current playback moment;
obtaining at least two static action features of the target object based on at least two video frames in the first video segment; and
obtaining the action feature of the target object based on the at least two static action features of the target object.

7. The video variable-speed playback method according to claim 6, wherein the obtaining the action feature of the target object based on the at least two static action features of the target object comprises:
generating the action feature of the target object based on a coherence feature between the at least two static action features.

8. The video variable-speed playback method according to any one of claims 1 to 7, wherein the target video further comprises a second video segment, which is played after the first video segment, and before the playing the target video based on the target playback speed, the video variable-speed playback method further comprises: obtaining a first playback speed of the target video, wherein the first playback speed is a playback speed of the target video before playback of the first video segment; and
the playing the target video based on the target playback speed comprises: playing the first video segment based on the target playback speed and continuing for the first duration, wherein the first duration is determined based on a target action feature of the target object in the first video segment; and after the first duration, playing the second video segment based on the first playback speed.

9. The video variable-speed playback method according to any one of claims 1 to 8, wherein the target video further comprises a second video segment, which is played after the first video segment, and the video variable-speed playback method further comprises: obtaining a second playback speed corresponding to the second video segment based on a difference between total playback duration of the target video and first duration, wherein the first duration is duration of the first video segment; and
the playing the target video based on the target playback speed comprises: playing the first video segment based on the target playback speed and continuing for the first duration; and after the first duration, playing the second video segment based on the second playback speed.

10. The video variable-speed playback method according to any one of claims 1 to 9, wherein the target video further comprises a second video segment, which is played after the first video segment, and the video variable-speed playback method further comprises:
obtaining total playback duration of the target video, and obtaining second duration based on a difference between the total playback duration and first duration, wherein the first duration is duration of the first video segment;
obtaining a second playback speed corresponding to the second video segment based on the second duration;
playing the first video segment based on the target playback speed and continuing for the first duration; and
after the first duration, playing the second video segment based on the second playback speed.

11. A video variable-speed playback apparatus, comprising:
an obtaining module configured to obtain a target video, the target video comprising at least a first video segment, and recognize the first video segment to obtain at least one target object;
a processing module configured to obtain an action feature of the target object, and obtain a target playback speed of the target video based on the action feature; and
a playback module configured to play the target video based on the target playback speed.

12. An electronic device, comprising: a processor and a memory in communication connection with the processor, wherein:
the memory stores computer-executable instructions; and
the processor executes the computer-executable instructions stored in the memory to implement the video variable-speed playback method according to any one of claims 1 to 10.

13. A computer-readable storage medium storing computer-executable instructions that, when executed by a processor, cause the video variable-speed playback method according to any one of claims 1 to 10 to be implemented.

14. A computer program product comprising a computer program that, when executed by a processor, causes the video variable-speed playback method according to any one of claims 1 to 8 to be implemented.
